# EUROPEAN PATENT APPLICATION

(11) **EP 2 031 619 A1**
(43) Date of publication of application: **04.03.2009**
(21) Application number: 07744683.9
(22) Date of filing: 05.06.2007
(51) Int. Cl.: H01H 13/14, H01H 11/00, H01H 13/702, H04M 1/23

(54) **MEMBER FOR PUSH-BUTTON SWITCH AND ITS MANUFACTURING METHOD**

(30) Priority: 06.06.2006 JP 2006156809
(71) Applicant: Sunarrow Limited, Tokyo 104-0032 (JP)
(72) Inventor: MURAKAMI, Shohei c/o Niigata Factory, Sunarrow Limited, Niigata 954-0076 (JP); SOUMA, Masaru c/o Niigata Factory, Sunarrow Limited, Niigata 954-0076 (JP)
(74) Representative: Vossius & Partner
(86) International application number: PCT/JP2007/061326
(87) International publication number: WO 2007/142211

(57) **Abstract**

Disclosed are a key top (4) to be used for push button switches of a portable electronic device, which key top has a metal sheet (6) with an approximately thin plate shape, and an outer-layer sheet (8a, 8b) made of a flexible material which is connected to one surface or both surfaces of the metal sheet (6), and a key sheet (2) which has the key top (4) and a sheet-like key base of an elastic material connected thereto, and methods of manufacturing the key top and the key sheet.

## Description

### [Technical Field]

The present invention relates to members to be used for push button switches of portable electronic devices, such as a cellular phone and a personal digital assistance (PDA) and a method of manufacturing the members. More particularly, the invention relates to a key top and a key sheet for which ON/OFF operation of a contact is performed in response to a pressing operation, and a manufacturing method thereof.

### [Related Art]

A key sheet is widely used as a part of push button switches of portable electronic devices, such as a cellular phone and a PDA. The key sheet is generally formed by connecting a key top made of a resin material and a key base made of an elastic material, such as silicone rubber or thermoplastic elastomer.

Recently, with miniaturization of portable electronic devices, there is a demand of making push button switches thinner, which leads to a demand of making a key top and a key sheet thinner. To achieve the thinning of push button switches, a key sheet has been proposed which includes, for example, a base film made of a resin material protruding upward and a core portion made of a resin material formed therein (see, for example, Patent Document 1).
Patent Document 1: Japanese Patent Application Laid-Open No. 2006-108003

Patent Document 1 describes that as the bottom of the core portion is formed above the bottom of the base film, even when a projecting portion for pressing the contact of a switch is provided at the bottom of the core portion, the bottom of the projecting portion can be arranged above the bottom of the base film, thereby narrowing the gap between the bottom of the base film and the substrate to make the push button switches thinner. In Patent Document 1, however, a pressing operation applies a load to the core portion, so that if the core portion of a resin is made thin, the strength thereof may become insufficient to damage the core portion. It is therefore difficult to realize significant thinning of push button switches.

It can be considered as a solution to make push button switches thinner by using a metal material which is stronger than a resin material to form a key top. Specifically, for example, it can be considered to form a key top having a set of push buttons arranged thereon by using a metal sheet.
In this case, in contrast to a resin material, the metal sheet has a sufficient strength to endure a load applied by a pressing operation even if the metal sheet is made very thin. However, an end portion of the metal sheet or an end portion of a notch area (if any) may be broken when in contact with another object. Additionally, as the metal sheet is made thinner, the recoverability (elasticity) of the metal sheet after the pressing operation ends becomes insufficient, so that push buttons may not return to the original positions at a practically sufficient speed.

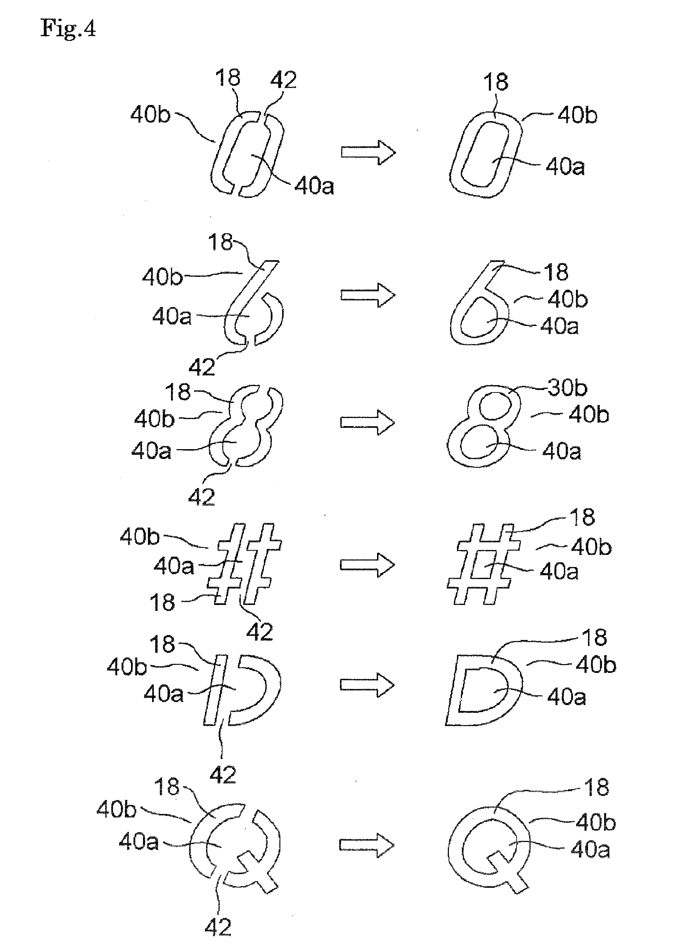

And portable electronic devices have a problem of heat generation from the substrate. When the key top is formed by a metal sheet having a higher heat conductivity than a resin, the heat generation from the substrate raises the temperature at the top surface of the key top. Even at the same temperature, when a user directly touches a finger to a metal material, the user may feel the temperature higher than that in a case where the user touches a resin material or the like.
In a case where the key top is constituted by a metal sheet alone, when a notch area for decoration is provided at the metal sheet, it is necessary to leave a connection portion to connect a metal portion inside the notch area to a metal portion outside for a figure like "0", "6" or "8" in which a space inside a line is separated from a space outside the line. Accordingly, a figure which completely isolates the inner portion of the notch area from the outer portion thereof cannot be made, which raises a decoration problem (see the figures on the left-hand side of the arrows in Fig. 4).

Therefore, it is an object of the invention to solve the above-mentioned problems and provide a key top and a key sheet to achieve thinning of push button switches using a metal sheet, preventing end portions of a metal sheet from being damaged, having practically a sufficient recoverability against a pressing operation, a capability to cope with heat generated from the substrate, and excellence in decoration. It is another object of the invention to provide a method of manufacturing the key top and the key sheet.

### Disclosure of the Invention

To achieve the objects, according to one aspect of the invention, there is provided a key top to be used for push button switches of a portable electronic device, comprising a metal sheet with an approximately thin plate shape; and an outer-layer sheet made of a flexible material which is connected to at least one surface of said metal sheet.

According to another aspect of the invention, there is provided a key sheet to be used for push button switches of a portable electronic device, which has a structure such that a sheet-like key base of an elastic material is connected to the above-mentioned key top.

According to another aspect of the invention, there is provided a method of manufacturing a key sheet to be used for push button switches of a portable electronic device, including the steps of: connecting an outer-layer sheet made of a flexible material to one surface of a metal sheet; providing a first notch area on said metal sheet by etching from the surface to which said outer-layer sheet is not connected; connecting an outer-layer sheet to the surface of said metal sheet to which the outer-layer sheet is not connected; providing a second notch area on at least one of said outer-layer sheets and said metal sheet by stamping, forming a sheet-like key base made of an elastic material which has a projecting portion corresponding to a shape of said second notch area; and inserting said projecting portion in said second notch area and connecting said key base to said outer-layer sheet in which said second notch area is provided.

### [Brief Description of the Drawings]

[Fig. 1] A cross-sectional view showing the schematic structure of push button switches using a key top and a key sheet according to the invention and showing an embodiment wherein the key top does not have a notch area.
[Fig. 2] A cross-sectional view showing the schematic structure of push button switches using a key top and a key sheet according to the invention and showing an embodiment wherein the key top has a notch area.
[Fig. 3] An exploded perspective view showing another embodiment of the key sheet of the invention.
[Fig. 4] A diagram showing a notch area for decoration according to the invention in comparison with a conventional notch area for decoration.
[Fig. 5] An exploded perspective view showing another embodiment of the key top of the invention.
[Fig. 6] A diagram showing a method of manufacturing a key top and a key sheet according to an embodiment of the invention.

### Detailed Description of the Invention

### General Description

A key top according to one embodiment of the present invention is a key top to be used for push button switches of a portable electronic device, comprising; a metal sheet with an approximately thin plate shape; and an outer-layer sheet of a flexible material which is connected to at least one surface of the metal sheet.

Herein, the "Key top" is a member corresponding to a push button portion of a push button switch, and the "metal sheet" is a member to be a core of the key top. The "approximately thin plate shape" includes a completely flat plate shape and includes a plate shape which generally appears a flat plate but has a certain degree of a concavoconvex shape.

The "outer-layer sheet" is connected to at least one surface of the metal sheet to form a key top. The outer-layer sheet mainly has a function of protecting the metal sheet, a function of providing the metal sheet with elasticity so that the key top has a practical recoverability as a push button, and a function of preventing heat from the substrate from being transmitted to the top surface of the push button. In a case where the outer-layer sheet is connected to only one surface of the metal sheet, it is preferable to connect the outer-layer sheet to the top surface side of the metal sheet where an operator's finger touches.
As means of connecting the metal sheet and the outer-layer sheet together, an adhesive, for example, can be used. In addition, the metal sheet and the outer-layer sheet can be connected together by forming a special surface processed layer. Any other available connecting methods can be used as well.

According to the embodiment, it is possible to use a key top having a plurality of push buttons arranged thereon as well as a key top having individual metal members for the respective push buttons. That is, because a flexible metal sheet and an outer-layer sheet are used in the embodiment, individual push buttons can be independently operated even when the key top has the plurality of push buttons arranged thereon. Even in the case where individual metal members are provided for the respective push buttons, the positional relationship of the individual push buttons can be maintained by the outer-layer sheet connected to the metal members, so that as a whole, an integrated key top can be provided.
To prevent abrasion of the surface of the outer-layer sheet which achieves the push button function, during manufacture of the key sheet, a protective sheet may be adhered to the surface.

All kinds of metals and alloys including aluminum, stainless steel, titanium, copper, silver and gold can be used as a material for the metal sheet. It is also possible to use a plated steel plate having zinc or the like plated thereon, and a metal whose surface has a ceramic material such as titanium nitride coated thereon.
The thickness of the metal sheet can be set to, for example, 0.5 mm or less, and should preferably be 0.2 mm or less or more preferably be 0.1 mm or less from the viewpoint of making the key top thinner.

While various flexible materials can be used as the material for the outer-layer sheet, a resin, for example, is feasible in consideration of the manufacture cost or the like. As resin materials to be used, all kinds of resins are available including, for example, polycarbonate (PC) based resin, polyethylene terephthalate (PET) based resin, polybutylene terephthalate (PBT) based resin, nylon based resin, polypropylene (PP) based resin, fluorine (PFA/FEP) based resin, and polyolefin based resin, and mixtures of those resins are also available.
The thickness of the outer-layer sheet can be set to 0.1 mm or less, and should preferably be 75 µm or less or more preferably be 50 µm or less from the viewpoint of making the key top thinner. With regard to the outer-layer sheets on both surfaces of the metal sheet, sheets of the same material and with the same thickness can be used on both surfaces of the metal sheet or sheets of different materials and with different thicknesses can be used on the respective surfaces.

An adhesive, for example, may be used as a method of connecting the metal sheet and the outer-layer sheet. In case of using a resin outer-layer sheet, an adhesive suitable for adhesion of a metal and a resin may be used as an adhesive used for the connection. Specifically, various adhesives, such as an epoxy based adhesive, acrylic adhesive, polyester adhesive and cyanoacrylate adhesive, can be used.

Because at least one surface of the metal sheet is covered with the outer-layer sheet in the embodiment, the metal sheet can be prevented from being damaged even if the metal sheet is made thin. With the elasticity of the outer-layer sheet connected to the metal sheet in addition to the elasticity thereof, the key top as a whole can obtain a practically sufficient elasticity even if the metal sheet is made thin.
Heat generated from the substrate causes a problem in a portable electronic device. However, for example, if a resin material is used for the outer-layer sheet in the key top of the invention, it hardly transmits the heat generated from the substrate to the top surface of the key top. With the outer-layer sheet provided on the top surface, a finger does not directly touch the metal, thus making it possible to suppress the influence of heat generated from the substrate in terms of sensible temperature.

Another embodiment of the key top of the invention has a sandwich structure in which the outer-layer sheet is connected to both surfaces of the metal sheet.

Because this embodiment has a sandwich structure having the metal sheet sandwiched between the outer-layer sheets, it is possible to more certainly prevent the metal sheet from being damaged. The elasticity of the outer-layer sheets on both sides in addition to the elasticity of the metal sheet can provide greater elasticity. Further, the outer-layer sheets on both sides of the metal sheet makes it harder for the heat generated from the substrate to be transmitted to the top surface of the key top, thereby suppressing the influence of heat generated from the substrate more effectively.
The total thickness of the key top formed by connecting the outer-layer sheets to both surfaces of the metal sheet can be set to, for example, 0.7 mm or less, and should preferably be 0.35 mm or less or more preferably be 0.2 mm or less.

According to another embodiment of the key top of the invention, a predetermined concavoconvex pattern is formed on the metal sheet.

According to the embodiment, various concavoconvex patterns can be provided; for example, a concavoconvex pattern can be provided according to the shapes of individual push buttons, a concavoconvex pattern for increasing the strength of the key top can be provided, or a concavoconvex pattern can be provided for the decoration purpose. The concavoconvex pattern can be formed by, for example, press working. The concavoconvex pattern of the embodiment is formed in such a way that the shape of the key top as a whole remains within the range of an approximately thin plate shape, and is suitable for making the key top thinner.

According to a further embodiment of the key top of the invention, a notch area for decoration and/or for push button movement is provided at the metal sheet.

Herein, the "notch area for decoration" includes, for example, a notch area indicating a numeral or a character provided on a push button and notch areas representing other symbols, figures, patterns, or the like, and as a light (backlight) is transmitted through the notch area, a numeral, a character, a symbol, a figure, a pattern or the like formed by the notch area can appear clearly. A transparent material or a material which permits light transmission should be used for the outer-layer sheet to enable transmission of the light through the notch area
The "notch area for push button movement" is a notch area provided entirely or partially around each push button. Because the key top of the invention is flexible, each push button can be moved without providing a notch area for push button movement, however the provision of a notch area for push button movement can improve the movability of each push button, thus improving the operational feeling of the push button.

As a method of providing those notch areas, various methods including etching, pressing (stamping) and machining can be used. Because a notch area for decoration has a complex shape, however, etching seems to be preferable to pressing. It is considered advantageous to form a notch area for push button movement by pressing in terms of cost. It is considered advantageous to form a notch area for push button movement together with a notch area for decoration by etching in terms of simplification of the manufacture process.
The embodiment includes a case where a notch area is provided only at the metal sheet and not at the outer-layer sheet, a case where a notch area is provided only at the metal sheet and one of the outer-layer sheets, and a case where a notch area is provided at the metal sheet and both outer-layer sheets.

According to a further embodiment of the key top of the invention, an inner metal portion existing inward of the notch area and an outer metal portion existing outward of the notch area are isolated by the notch area, and a positional relationship between the inner metal portion and the outer metal portion is maintained by the connected outer-layer sheet.

The outer-layer sheets are connected to both surfaces of the metal sheet according to the embodiment, so that even if the inner metal portion existing inward of the notch area and the outer metal portion existing outward of the notch area are completely isolated, the positional relationship of them can be maintained by the outer-layer sheets having an adhesive provided on the top surfaces thereof. As regards a notch area for decoration, it is unnecessary to provide a connecting portion which impairs the decoration and possible to provide a notch area excellent in decorative effect. Regarding a notch area for push button movement, there is no connecting portion which becomes a moving resistance, thereby improving the movability of the push buttons.
With the key sheet having the key base connected to the key top, even if the inner metal portion existing inward of the notch area and the outer metal portion existing outward of the notch area are completely isolated, the positional relationship of them can be maintained by the key base.

According to a further embodiment of the key top of the invention, predetermined coloring is applied to a position of at least one of the outer-layer sheets.

According to the embodiment, for example, by applying predetermined coloring to the position of the outer-layer sheet connected to the bottom side of the metal sheet which corresponds to the notch area for decoration, light transmission can allow a figure formed by the notch area to appear with a predetermined color. In this case, a colored portion which exists beyond the figure formed by the notch area for decoration is not seen from the top surface side of the key top, thus making it unnecessary to color just according to the figure. Even in a case where the outer-layer sheet previously colored is connected to the metal sheet, it is possible to easily position the colored portion.
The embodiment includes coloring of the outer-layer sheet connected to the top surface side of the metal sheet in a predetermined pattern. With regard to the colored surface of the outer-layer sheet, the outer surface of the outer-layer sheet (a surface which does not contact the metal sheet) can be colored or that a surface of the outer-layer sheet which contacts the metal sheet can be colored.

A key sheet to be used for push button switches of a portable electronic device according to one embodiment of the invention has a structure such that a sheet-like key base of an elastic material is connected to the above-mentioned key top.

The "key base" herein is a member which is connected to the key top to constitute the key sheet, generally has a pressing projection provided at the bottom surface, and has a function of pressing a dish-like contact provided at the substrate through the pressing projection. To obtain flexible operational feeling of push buttons, an elastic material is normally used as the material for the key base.
For example, silicone rubber or thermoplastic elastomer can be used as the elastic material. The thermoplastic elastomer has a characteristic such that it does not require curing. Specific examples of the thermoplastic elastomer include polystyrene elastomer, polyolefin elastomer, polyester elastomer, polyurethane elastomer, and polyamide elastomer.
The thickness of the key base including the pressing projection can be set to 0.8 mm or less, and should preferably be 0.5 mm or less or more preferably be 0.3 mm or less from the viewpoint of making the key sheet thinner.

The embodiment includes a case where the key base is connected to, for example, the surface of the metal sheet in the key top which has the outer-layer sheet connected only to one surface of the metal sheet, and a case where the key base is connected to the surface of one of the outer-layer sheets in the key top which has the outer-layer sheets connected to both surfaces of the metal sheet.

As a method of connecting the key base to the key top, for example, an adhesive can be used. In a case of connecting the key base to a resin outer-layer sheet, an adhesive suitable for connecting rubber or thermoplastic elastomer to a resin can be used as an adhesive to achieve the connection. Specifically, various adhesives are available including, for example, a chloroprene rubber based adhesive, NBR based adhesive, polyurethane adhesive, hot melt adhesive, a cyanoacrylate adhesive, a polyester adhesive, and a polyolefin adhesive.
In a case of connecting the key base to the metal sheet, for example, any adhesive suitable for connecting rubber or thermoplastic elastomer to a metal can be used. It is also possible to connect the key base to the key top without using an adhesive but by forming a special surface processed layer between the rubber key base and the key top. Any other available connecting methods can be used as well.
As means of connecting the completed key sheet to the substrate or the like, for example, an adhesive sheet having both surfaces serving as adhesive surfaces, an adhesive or the like, mechanical connection means, and any other connection means available can be used.

According to the embodiment, the key top in which the outer-layer sheet of a flexible material is connected to the metal sheet can provide click-like operational feeling. Additionally together with the additional elasticity of the key base, it can provide a key sheet having click-like feeling as well as flexible operational feeling of push buttons.

Another embodiment of the key sheet of the invention is a key sheet to be used for push button switches of a portable electronic device, comprising: a key top having a sandwich structure having a metal sheet with an approximately thin plate shape, and outer-layer sheets made of a flexible material which are connected to both surfaces of said metal sheet; a sheet-like key base made of an elastic material which is connected to one surface of said key top; wherein a notch area for push button movement is provided on at least one of said outer-layer sheets and said metal sheet; and a projecting portion provided on said key base is inserted in said notch area.

According to the embodiment, the provision of the notch area for push button movement can improve the movability of push buttons, and, together with the elasticity of the key base, it can provide the key sheet which provides click-like operational feeling and flexible operational feeling of push buttons.
According to the embodiment, in addition to the protection of the metal sheet by the sandwich structure of the key top having the metal sheet sandwiched between the outer-layer sheets, it can also protect the metal sheet by the projecting portion of the key base, which is inserted in the notch area. In the case where the notch area is provided only at the lower outer-layer sheet, the top surface of the metal sheet is covered with the upper outer-layer sheet without any notch area, so that the metal sheet can be protected more effectively.

One embodiment of a method of manufacturing a key sheet according to the invention is a method of manufacturing a key sheet to be used for push button switches of a portable electronic device, including the steps of: connecting an outer-layer sheet made of a flexible material to one surface of a metal sheet; providing a first notch area on said metal sheet by etching from the surface to which said outer-layer sheet is not connected; connecting an outer-layer sheet to the surface of said metal sheet to which the outer-layer sheet is not connected; providing a second notch area on at least one of said outer-layer sheets and said metal sheet by stamping, forming a sheet-like key base made of an elastic material which has a projecting portion corresponding to a shape of said second notch area; and inserting said projecting portion in said second notch area and connecting said key base to said outer-layer sheet in which said second notch area is provided.

According to this embodiment, the connection of the metal sheet, the outer-layer sheet and the key base is executed in adequate procedures and etching or stamping is executed in adequate procedures according to the purpose or size of the notch area, thereby ensuring efficient manufacture of the key sheet at a low manufacturing cost.
To prevent abrasion of the surface of the outer-layer sheet which achieves the push button function, during manufacture of the key sheet, a step of adhering a protective sheet to the surface can be added. Further, a step of removing the protective sheet after completion of the key sheet can be added.

The method of manufacturing a key top according to another embodiment of the invention further includes a step of applying predetermined coloring to a position of the outer-layer sheet which corresponds to the first notch area and/or the second notch area, before or after connection of the outer-layer sheet to the metal sheet.

This embodiment can apply coloring efficiently at a low manufacturing cost.

### Effect of the Invention

As described above, the key top of the invention has the metal sheet covered with the outer-layer sheet, so that even if the metal sheet is made thinner, the metal sheet can be prevented from being damaged. Further, in the case where the key top of the invention has a sandwich structure having the metal sheet sandwiched between the outer-layer sheets, it is possible to more effectively prevent the metal sheet from being damaged.
With the elasticity of the outer-layer sheet connected to the metal sheet in addition to the elasticity of the metal sheet, even if the metal sheet is made thinner, the key top of the invention as a whole can obtain practically sufficient elasticity.
According to the key top of the invention, heat generated from the substrate is not easily transmitted to the top surface of the key top, thus making it possible to suppress the influence of the heat from the substrate in terms of sensible temperature.
Because the inner metal portion existing inward of the notch area can be isolated from the outer metal portion existing outward of the notch area, it is possible to improve the decorative effect and the operability of push buttons.
Further, according to the key top of the invention, the projecting portion of the key base which is inserted in the notch area can protect the metal sheet.

In the method of manufacturing a key sheet according to the invention, the connection of the metal sheet, the outer-layer sheet and the key base is executed in adequate procedures and etching or stamping is executed in adequate procedures according to the purpose or size of the notch area, thus making it possible to ensure efficient manufacture of the key sheet at a low manufacturing cost.

### Description of the Illustrated Embodiment

Embodiments of a key top and a key sheet according to the invention, and an embodiment of a method of manufacturing thereof will be described below in detail referring to the accompanying drawings.

### (Description of Embodiments of Key Top and Key Sheet of the Invention)

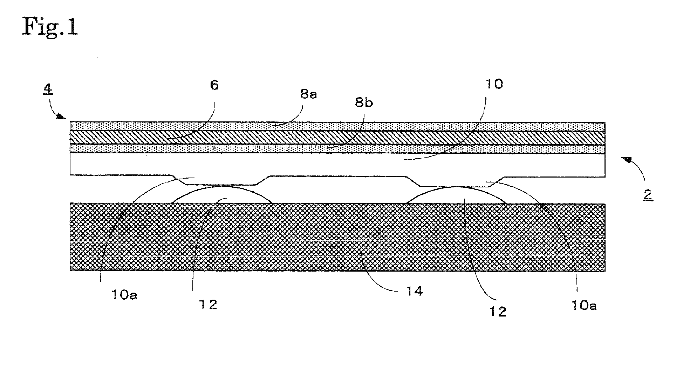

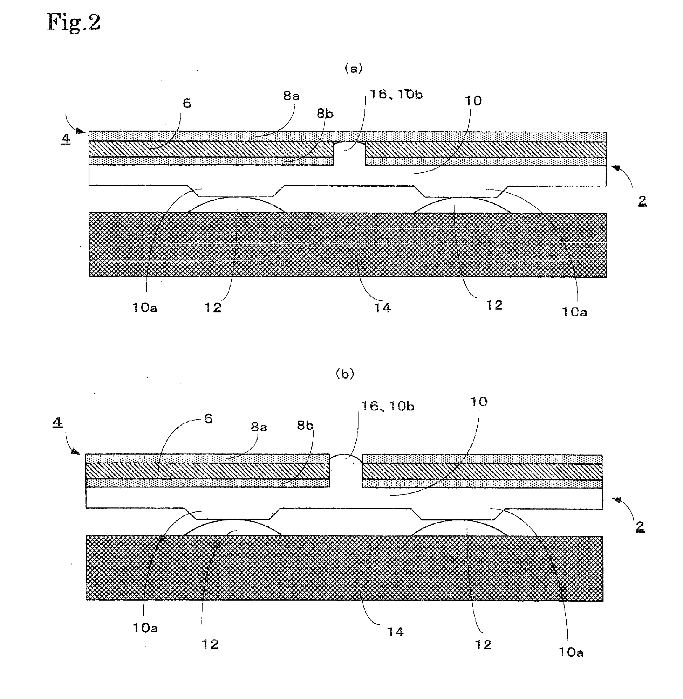

At first, an embodiment of a key top of the invention and an embodiment of a key sheet having such key top will be described referring to Figs. 1 and 2. Figs. 1 and 2 are cross-sectional views showing the schematic structures of push button switches using the key top and key sheet of the invention. The illustrated embodiments are of a case where push button switches are used for a cellular phone.
Fig. 1 shows an embodiment wherein the key top does not have a notch area, and Fig. 2 shows an embodiment wherein the key top has a notch area.

### <Explanation of Embodiment shown in Fig. 1>

Firstly, referring to Fig. 1, an explanation will be made regrding the embodiment wherein the key top does not have a notch area. In the embodiment, outer-layer sheets 8a, 8b made of a flexible material are connected to both surfaces of a metal sheet 6 with an approximately thin plate shape to form a key top 4, and a sheet-like key base 10 made of an elastic material is connected to the lower outer-layer sheet 8b of the key top 4, thereby constituting a key sheet 2. The key sheet 2 can also be configured by connecting the outer-layer sheet 8a only to the top surface of the metal sheet 6 to form the key top 4 and connecting the key base 10 to the bottom surface of the metal sheet 6 of the key top 4.

In the key sheet 2, pressing projections 10a to press dish-like contacts 12 provided on a substrate 14 are provided on the bottom surface of the key base 10. This structure can ensure the ON/OFF operation of the dish-like contacts 12 as the key top 4 is pressed down. Specifically, as an operator presses an area on the key top 4 which is equivalent to a predetermined push button, the key top 4 and the key base 10 at that area bend downward to press the associated dish-like contact 12 through the respective pressing projection 10a. This causes the push button to be switched on. When the operator's depression stops, the bent area returns to the original position quickly according to the elasticity of the key top 4 and the key base 10 connected thereto, and releasing the depression of the dish-like contact 12 so that the push button can return to the OFF state.

As described above, the key top 4 which has the metal sheet 6 and the outer-layer sheets 8a, 8b can realize click-like operational feeling, and, with the additional elasticity of the key base 10, it can further provide additional flexible operational feeling. It is desirable that the specifications of the metal sheet 6, the outer-layer sheets 8a, 8b and the key base 10 be so determined as to provide the optimal operational feeling according to the use purpose of the push buttons, the preference of the user and the like.
To prevent abrasion of the surface of the outer-layer sheet 8a which achieves the push button function, during manufacture or the like of the key sheet 2, a protective sheet may be adhered to that surface.

### <Explanation of Metal Sheet 6>

All kinds of metals and alloys including aluminum, stainless steel, titanium, copper, silver and gold can be used as a material for the metal sheet 6. It is also possible to use a plated steel plate having zinc or the like plated thereon. Available materials include a metal whose surface has a ceramic material such as titanium nitride coated thereon.
As a typical manufacturing method for the metal sheet 6, the metal sheet 6 can be manufactured by, for example, casting, or can be manufactured by rolling or forging after casting. It is to be noted however that the metal sheet 6 needs elasticity and strength enough to endure bending and a load applied by the pressing operation, so that it is not so adequate to form a metal layer by vacuum deposition, sputtering, ion plating or the like.

The thickness of the metal sheet 6 can be set to 0.5 mm or less, and should preferably be 0.2 mm or less or more preferably be 0.1 mm or less from the viewpoint of making the key top 4 thinner. The thickness of the metal sheet 6 should be set to the optimal thickness according to the strength of the material to be used, the use purpose of the metal sheet 6, and the specifications of the outer-layer sheets 8a, 8b to be connected thereto. As far as the strength is concerned, the metal sheet 6 can be used in the micron order.
The approximately thin plate shape of the metal sheet 6 can be a quite flat plate shape or can have little concavoconvex portions provided by extruding or the like. It is to be noted however that the formation of the concavoconvex portions should be within the range of the "approximately thin plate shape" from the viewpoint of making the key top 4 thinner, and it would not be so adequate to provide large concavoconvex portions by deep drawing or the like.
The surface state of the metal sheet 6 can be subjected to, for example, mirror processing or hair line processing, or to optimal finishing according to the use purpose.

### <Explanation of Outer-layer sheets 8a, 8b>

While the key top 4 of the embodiment has a sandwich structure having the metal sheet 6 sandwiched between the outer-layer sheets 8a, 8b, the outer-layer sheets 8a, 8b mainly have a function of protecting the metal sheet 6, a function of providing the metal sheet 6 with elasticity so that the key top 4 has a practical elasticity as a push button, and a function of preventing heat from the substrate from being transmitted to the top face of the push button.

While all kinds of flexible materials can be used as the material for the outer-layer sheets 8a, 8b, a resin is feasible in consideration of the manufacture cost or the like. As resin materials to be used for the outer-layer sheets 8a, 8b, all kinds of resins are available including, for example, polycarbonate (PC) based resin, polyethylene terephthalate (PET) based resin, polybutylene terephthalate (PBT) based resin, nylon based resin, polypropylene (PP) based resin, fluorine (PFA/FEP) based resin, and polyolefin based resin, and mixtures of those resins are also available.
As a method of manufacturing the outer-layer sheets 8a, 8b, for example, a heated resin material may be placed in an extruder to manufacture a resin sheet. As the key top 4 serves to supplement the strength of the metal sheet 6 so as to endure bending or a load applied by the pressing operation, a method of forming a coating layer by vapor deposition or the like is not so appropriate.

The thickness of the outer-layer sheet 8a, 8b can be set to 0.1 mm or less, and should preferably be 75 µm or less or more preferably be 50 µm or less from the viewpoint of making the key top thinner. The thickness of the outer-layer sheet 8a, 8b should be set to the optimal thickness in systematic consideration of the demand of making the key top 4 thinner, the function of protecting the metal sheet 6, the function of providing the metal sheet 6 with elasticity, and the function of preventing heat from the substrate from being transmitted to the top face of the push button.
In the case where the concavoconvex portions are provided on the connected metal sheet 6, similar concavoconvex portions are provided on the outer-layer sheets 8a, 8b. It is generally considered preferable to use a transparent material or a material which transmits a light in order to permit the surface of the metal sheet 6 to be seen from outside or in order for the light (backlight) to be transmitted via the notch area. It is however possible to use a material through which a light cannot transmit or hardly transmit according to the application. The outer-layer sheets 8a, 8b can be colored with a desired color, or only that area where light passes can be colored. The outer-layer sheet 8a and the outer-layer sheet 8b can be sheets which are made of the same material and have the same thickness, or can be sheets which are made of different materials and have different thicknesses.

As being apparent from the above, the thickness of the key top 4 formed by connecting the outer-layer sheets 8a, 8b to both surfaces of the metal sheet 6 can be set to 0.7 mm or less, and should preferably be 0.35 mm or less or more preferably be 0.2 mm or less.

### <Explanation of Connection of Metal Sheet 6 to Outer-layer Sheets 8a, 8b>

As one way of connecting the metal sheet 6 to the outer-layer sheets 8a, 8b, an adhesive may be used. In the case where the outer-layer sheets 8a, 8b are formed made of a resin, for example, an adhesive suitable for adhesion of a metal and a resin may be used as an adhesive used for the connection. Specifically, various adhesives, such as an epoxy based adhesive, acrylic adhesive, polyester adhesive and cyanoacrylate adhesive, can be used.

It is also possible to connect the metal sheet 6 to the outer-layer sheets 8a, 8b without using an adhesive but by forming a special surface processed layer between them or using any other methods available for connecting a metal and a resin. For example, a layer which chemically reacts with a resin can be plated on the surface of the metal sheet 6, after which the coated layer is chemically reacted with the outer-layer sheets 8a, 8b for connection.

### <Explanation of Key Base 10>

An explanation will now be made for the key base 10 which is connected to the key top 4 to constitute the key sheet 2. The key base 10 has the pressing projections 10a provided at the bottom surface thereof, so that the dish-like contacts 12 provided at the substrate 14 can be pressed through the pressing projections 10a. To obtain flexible operational feeling of push buttons, the key base 10 is generally formed of an elastic material.
For example, silicone rubber or thermoplastic elastomer may be used as the elastic material. The thermoplastic elastomer has a characteristic such that it does not require curing. Specific examples of the thermoplastic elastomer include polystyrene elastomer, polyolefin elastomer, polyester elastomer, polyurethane elastomer, and polyamide elastomer.

As shown in Fig. 1, the key base 10 is configured in such a way that the pressing projections 10a for pressing the dish-like contacts 12 provided at the substrate 14 are provided at the bottom surface of the key base 10. The pressing projections 10a permit the load applied by the pressing of the key top 4 to be transmitted to the dish-like contacts 12 to enable the ON/OFF operation of the dish-like contacts 12.
The thickness of the key base 10 including the pressing projections 10a can be set to 0.8 mm or less, and should preferably be 0.5 mm or less or more preferably be 0.3 mm or less from the viewpoint of making the key sheet 2 thinner. It is desirable that the thickness, the material, the hardness or the like of the key base 10 should be determined so as to be able to provide the desired operational feeling.

### <Explanation of Connection of Key Base 10 to Key Top 4 (Outer-layer sheet 8b)>

As a method of connecting the key base 10 to the key top 4 (outer-layer sheet 8b), for example, an adhesive can be used. In the case of using a resin as the material for the outer-layer sheet, an adhesive suitable for connecting rubber or thermoplastic elastomer to a resin can be used as an adhesive to achieve the connection. Specifically, various adhesives are available including, for example, a chloroprene rubber based adhesive, NBR based adhesive, polyurethane adhesive, hot melt adhesive, a cyanoacrylate adhesive, a polyester adhesive, and a polyolefin adhesive.
It is also possible to connect the key base 10 to the key top 4 (outer-layer sheet 8b) without using an adhesive but by forming a special surface processed layer between the key base 10 and the key top 4, or using any other available connecting methods for rubber and a resin.
As described above, in the key sheet 2 constituted by the key top 4 formed by connecting the outer-layer sheets 8a, 8b to both surfaces of the metal sheet 6, and the key base 10, the total thickness from the top surface of the key top 4 to the bottom surface of the pressing projections 10a of the key base 10 can be set to 1.5 mm or less, and should preferably be 0.85 mm or less, or more preferably be 0.5 mm or less.

### <Explanation of Embodiment of Fig. 2>

An embodiment having a notch area provided at the key top will be explained referring to Fig. 2. A notch area 16 is provided in the metal sheet 6 and the lower outer-layer sheet 8b in the embodiment shown in Fig. 2A, while the notch area 16 is provided in the metal sheet 6 and both outer-layer sheets 8a, 8b in the embodiment shown in Fig. 2B. Those notch areas 16 can be provided entirely or partly around the push button to improve the movability of the push button. In the case where the notch area 16 is provided entirely around the push button, the positional relationship of the individual push buttons can be maintained by the outer-layer sheet 8a and/or the key base 10. A projecting portion 10b provided on the key base 10 is inserted in the notch area 16. The materials, specifications, sizes or the like of the metal sheet 6, the outer-layer sheets 8a, 8b and the key base 10 which constitute the key sheet 2 are the same as those of the embodiment shown in Fig. 1, except for the notch areas 16 and the projecting portions 10b.

In the embodiment, while the movability of the push button is improved by the notch area 16, the sandwich structure of the key top 4, which has the metal sheet 6 sandwiched between the outer-layer sheets 8a, 8b, makes it possible to prevent the end portions of the metal sheet 6 at the notch area 16 from being damaged. Further, in the embodiment shown in Fig 2A, the projecting portion 10b inserted in the notch area 16 protects the metal sheet 6, thereby preventing the end portions of the metal sheet 6 at the notch area 16 from being damaged. Additionally it is possible to more effectively prevent the end portions from being damaged in the embodiment shown in Fig. 2A because the end portions of the metal sheet 6 at the notch area 16 are covered with the outer-layer sheet 8a.
In the embodiment shown in Fig. 2B, the notch area 16 is provided in all of the metal sheet 6 and the outer-layer sheets 8a, 8b, the pressability of the push buttons can be further improved. Further, the projecting portion 10b on the key base 10 is inserted to the top surface of the outer-layer sheet 8a of the notch area 16, thereby protecting the metal sheet 6 and preventing the end portions of the metal sheet 6 at the notch area 16 from being damaged.

Because the key top 4 shown in Figs. 1 and 2 has a sandwich structure having the metal sheet 6 sandwiched between the outer-layer sheets 8a, 8b, as described above, the end portions of the metal sheet 6 can be prevented from being damaged even if the metal sheet 6 is made thinner. With the elasticity of the outer-layer sheets 8a, 8b added to the metal sheet 6, the key top 4 as a whole can secure practically sufficient elasticity even if the metal sheet 6 is made thinner. While heat generated from the substrate becomes a problem in a portable electronic device, if the outer-layer sheets 8a, 8b are made of a resin material, they will make it harder for the heat from the substrate to be transmitted to the top surface of the key top 4, and prevents a finger from directly touching the metal, thus making it possible to suppress the influence of heat generated from the substrate in terms of sensible temperature.
According to the key sheet 2 shown in Figs. 1 and 2, even in the case where the notch area is provided to improve the movability of the push button, the projecting portion 10b on the key base 10 which is inserted in the notch area 16 can protect the end portions of the metal sheet 6 at the notch area 16. When the top surface of the metal sheet 6 is covered with the outer-layer sheet 8a (see Fig. 2A), in particular, the end portions at the notch area 16 can be protected more effectively.

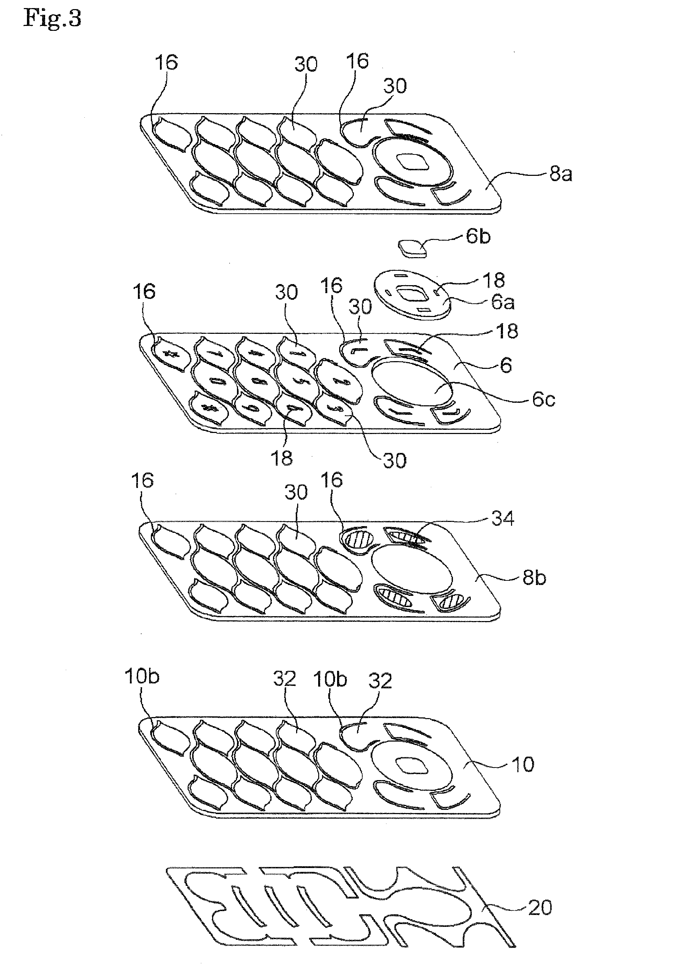

### <Explanation of Embodiment of Fig. 3>

Another embodiment of the key sheet of the invention will be explained referring to Fig. 3. Fig. 3 is an exploded perspective view showing the key sheet 2 which is adhered to the operational surface of a cellular phone to serve as push button switches. Fig. 3 is the exploded perspective view showing the individual members of the completed key sheet 2 which are provided with final concavoconvex shapes and notch areas. The materials, thicknesses, other specifications or the like of the individual members are the same as those of the abovementionbed embodiment.

The outer-layer sheet 8a is connected to the top surface of the metal sheet 6, and the outer-layer sheet 8b is connected to the bottom surface of the metal sheet 6, thereby forming the key top 4. Further, the key base 10 is connected to the bottom surface of the outer-layer sheet 8b of the key top 4, thereby forming the key sheet 2. The projecting portions (not shown) is provided on the bottom surface of the key base 10 for pressing the dish-like contacts provided on the substrate.
An opening 6c with an approximately circular shape is provided on the metal sheet 6, and a metal member 6a and a metal member 6b for push buttons are disposed in the opening 6c. The positions of the metal members 6a, 6b with respect to the metal sheet 6 are maintained by the outer-layer sheets 8a, 8b having adhesives on the surfaces thereof.
In this embodiment, an adhesive sheet 20 for connecting the key sheet 2 to the substrate of the cellular phone is adhered to the bottom surface of the key base 10. A cover sheet is attached to the bottom surface of the adhesive sheet 20, and at the time of connecting the key sheet 2 to the substrate of the cellular phone, the cover sheet is removed to expose the adhesive surface before adhesion. The adhesive sheet 20 is not essential, and any other connecting means can be used to connect the key sheet 2 to the substrate or the like.

According to the key top 4 of the embodiment, after the metal sheet 6 and the outer-layer sheets 8a, 8b are integrally connected together, stamping of the outer shape and the notch areas 16 for push button movement and the formation of concavoconvex shapes 30 are carried out by pressing. In forming the concavoconvex shapes, for example, the concavoconvex shapes 30 having expanding center portions are formed at areas in the metal sheet 6 which correspond to push buttons showing numerals 0 to 9 and other symbols, and similar concavoconvex shapes 30 are also formed at the outer-layer sheets 8a, 8b. Projecting shapes 32 corresponding to the concavoconvex shapes 30 are previously formed on the key base 10.
Each of the notch areas 16 for push button movement to improve the movability of the push buttons is provided partially around the area of each push button, and similar notch areas 16 are provided at the outer-layer sheets 8a, 8b.

The numerals, symbols or the like shown on the push buttons are formed by notch areas 18 for decoration provided at the metal sheet 6, and they can be shown clearly by transmitting a light (backlight) through the notch areas 18. The notch areas 18 for decoration are formed by etching, and are provided only at the metal sheet 6. The details of the notch areas 18 for decoration will be described below.

Predetermined colors 34 such as red, blue and green, are applied to positions of the outer-layer sheet 8b connected to the bottom surface of the metal sheet 6 which correspond to the notch areas 18 for decoration. When a light (backlight) is transmitted through the notch areas 18, therefore, the numerals, symbols or the like formed by the notch areas 18 for decoration stand out showing predetermined colors. In this case, the colored portions exists beyond the numerals, symbols or the like formed by the notch areas 18 for decoration are not seen from the top surface side of the key top 4, and thus need not be colored just according to the shapes of the numerals, symbols or the like. Even in the case where the outer-layer sheet 8b is colored previously and is connected to the metal sheet 6 thereafter, the colored portions 34 can be easily aligned.
The numerals, symbols or the like can be written directly on the outer-layer sheet 8a connected to the top surface of the metal sheet 6 using a color paint or the like. With regard to the colored surfaces of the outer-layer sheets 8a, 8b, the outside surfaces which do not contact the metal sheet 6 can be colored, or the surfaces which contact the metal sheet 6 can be colored as well.

### <Explanation of Notch Areas for Decoration>

Because the invention has a sandwich structure having the metal sheet 6 sandwiched between the outer-layer sheets 8a, 8b, it is possible to provide notch areas 18 for decoration having a better decorative effect. This will be explained referring to an embodiment shown in Fig. 4.
Fig. 4 shows numerals like "0", "6" and "8", symbols like "#" and alphabets like "D" and "Q" as one example of figures each having the inner space inward of a line and the outer space outward of a line separated by the line. The left-hand side of the arrows in Fig. 4 shows an embodiment in the case where such figures are represented using the key top constituted only by the metal sheet. In this case, to provide the notch area 18 for decoration at the metal sheet 6 to represent such a figure, it is necessary to provide, at a part of the notch area 18, a connecting portion 42 to connect a metal portion 40a inside the notch area 18 to a metal portion 40b outside the notch area 18 in order to support the metal portion 40a inside the notch area 18. It is not therefore possible to express a figure having an inner portion and an outer portion completely isolated by the line.

As the outer-layer sheets 8a, 8b are connected to both surfaces of the metal sheet 6 in the key top 4 of the invention, even if the metal portion 40a inside the notch area 18 and the metal portion 40b outside the notch area 18 are completely isolated from each other as shown on the right-hand side of the arrows in Fig. 4, the positional relationship between them can be maintained by the outer-layer sheets 8a, 8b having adhesives on the surfaces thereof. This makes it possible to provide the notch area 18 excellent in decorative effect and having no connecting portion 42 which impairs the decorative effect.
Although the positional relationship between the inner metal portion 40a and the outer metal portion 40b can be maintained even with one of the outer-layer sheets 8a, 8b, the metal portion 40a or the like may be separated from the outer-layer sheet when the surface exposing the metal portion 40a, 40b comes in contact with another object. It is therefore preferable that the metal portions 40a, 40b should be held from both sides by the outer-layer sheet 8a and the outer-layer sheet 8b.

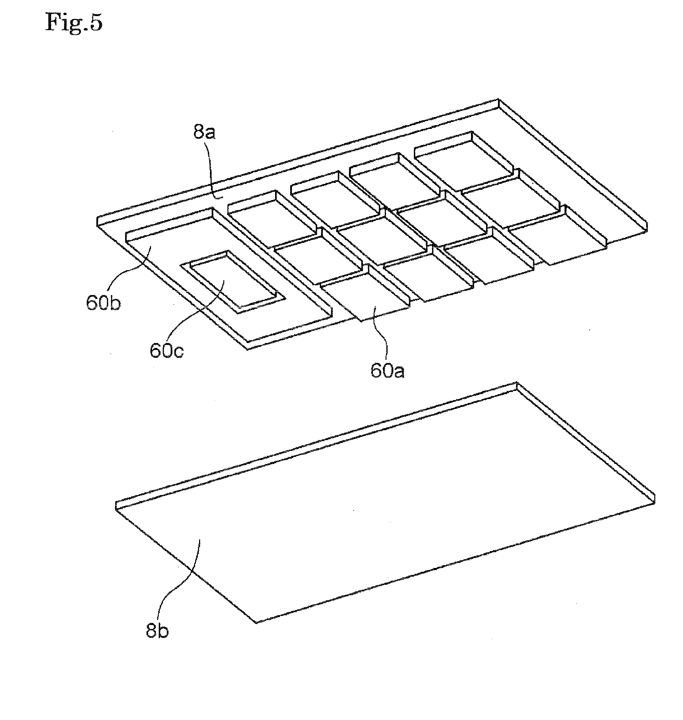

### <Explanation of Embodiment of Fig. 5>

Referring to Fig. 5, an explanation will be made for an embodiment of the key top in which a notch area is provided all around each push button and metal members corresponding to the individual push buttons are independent to one another. Fig. 5 is an exploded perspective view showing the key top 4.
In Fig. 5, independent metal members 60a, 60c for the respective push buttons and another metal member 60b constitute a metal sheet 60, and the metal members 60a, 60b, 60c are adhered to the outer-layer sheet 8a to keep the positional relationship among them. Connecting the another outer-layer sheet 8b to the resultant structure constitutes the key top 4 that has a sandwich structure having the metal sheet 60 sandwiched between the outer-layer sheets 8a, 8b. The key base is connected to the bottom surface of the outer-layer sheet 8b of the key top 4, thereby forming a key sheet. A notch area can be provided on the outer-layer sheet 8b according to the shape of each push button.

The formed key sheet can have, for example, a cross-sectional shape as shown in Fig. 2 or Fig. 3. In the case of the key sheet shown in Fig. 2, the positional relationship among the metal members 60a, 60b, 60c is maintained by the outer-layer sheet 8a and the key base 10. In the case of the key sheet shown in Fig. 3, the positional relationship among the metal members 60a, 60b, 60c is maintained by the key base 10. The projecting portions 10b of the key base 10 may be arranged in such a way as to be inserted between the metal members 60a, 60b, 60c.In this case, the projecting portions 10b can prevent the metal members 60a, 60b, 60c from being damaged.

A key sheet having the key base can be formed by connecting the key base directly to the metal members 60a, 60b, 60c without connecting the outer-layer sheet 8b. The use of the key top having the independent metal members corresponding to the respective push buttons can further enhance the operability of the push buttons.

### (Explanation of One Embodiment of Manufacture Method for Key Top and Key Sheet of the Invention)

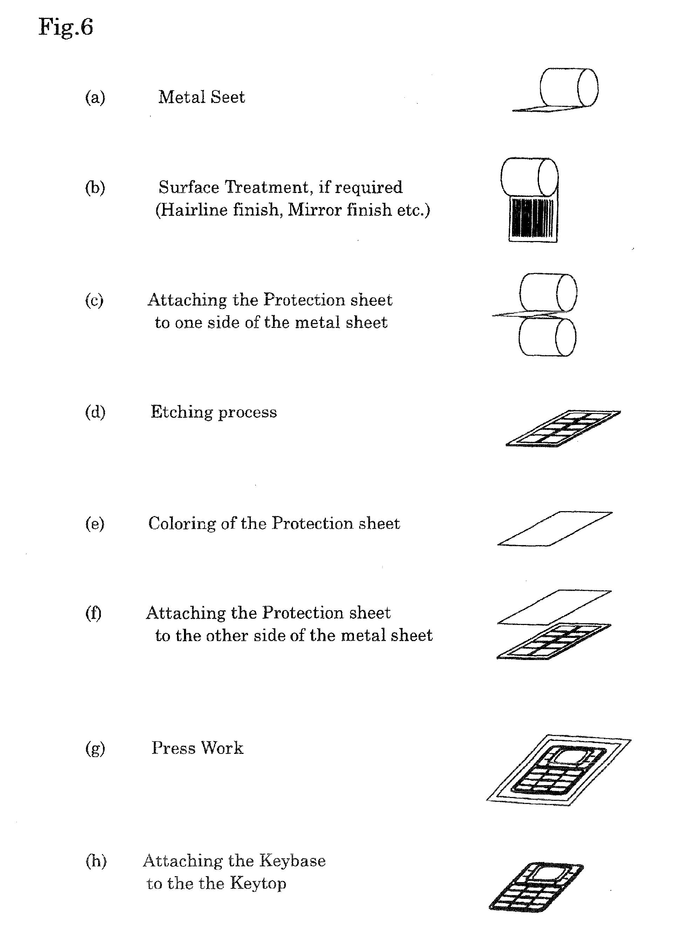

Referring now to Fig. 6, an explanation will be made for one embodiment of a manufacture method for the key top and key sheet of the invention. In this embodiment, a key top and a key sheet which have structures similar to those of the embodiment shown in Fig. 4 are manufactured.
Firstly, a metal sheet of a predetermined material having a predetermined thickness is prepared as shown in Fig. 6A, and the surface of the metal sheet is subjected to surface processing, such as hair line processing or mirror processing, as needed as shown in Fig. 6B. In general, the surface processed surface is arranged on the top surface side of the key top to demonstrate a design effect.

Secondly, as shown in Fig. 6C, a resin outer-layer sheet is connected to one side of the metal sheet using an adhesive. When surface processing, such as hair line processing or mirror processing, is performed, the outer-layer sheet is adhered to the surface processed surface. It is possible to use a sheet available on the market which has the outer-layer sheet previously connected to the metal sheet.
In the next place, as shown in Fig. 6D, the unmasked area of the metal sheet is melted by etching to provide notch areas for decoration having predetermined shapes. In this case, the notch areas can be provided only at the metal sheet by using such an etchant which melts a metal sheet but does not melt a resin outer-layer sheet.
Because the notch areas for decoration have complicated shapes, it is preferable to form the notch areas by etching. While it seems advantageous to form notch areas for push button movement by pressing in terms of cost as described later, the notch areas for push button movement can be formed together with the notch areas for decoration by etching. In the latter case, the manufacture process can be simplified.

And, as shown in Fig. 6E, predetermined coloring is performed on the resin outer-layer sheet to be connected to the opposite surface of the metal sheet (where the outer-layer sheet is not connected) at positions corresponding to the notch areas for decoration. Then, as shown in Fig. 6F, the colored resin outer-layer sheet is connected to the opposite surface of the metal sheet (where the outer-layer sheet is not connected). Although the outer-layer sheet is connected to the metal sheet after being colored in the embodiment, the outer-layer sheet can be colored after being connected to the metal sheet. Coloring may be performed on the outer surface of the outer-layer sheet (the surface which does not contact the metal sheet) or may be performed on the surface of the outer-layer sheet which contacts the metal sheet.

Then, as shown in Fig. 6G, on the condition where the outer-layer sheets are integrally connected to both surfaces of the metal sheet, stamping of the outer shape of the key top, stamping of the notch areas for push button movement to improve the movability of the push buttons and the formation of predetermined concavoconvex shapes with drawing are executed at a time by pressing, thereby manufacturing the key top. As described above, the notch areas for push button movement are provided on the metal sheet and the outer-layer sheets on both surfaces thereof in the embodiment. As mentioned above, the notch areas for push button movement can be formed together with the notch areas for decoration by etching. In this case, it is possible to manufacture a key top configured to have notch areas on the metal sheet but have no notch areas on the outer-layer sheets.
Apart form the above-mentioned step, a step of providing predetermined notch areas at the metal sheet before connecting the metal sheet to the outer-layer sheets, then connecting the outer-layer sheets to the metal sheet is possible. In this case, it is also possible to manufacture a key top configured to have notch areas on the metal sheet but have no notch areas on the outer-layer sheets.

After the key top is formed through the above-mentioned steps, a key base of an elastic material is connected to the bottom surface of the key top using an adhesive to complete a key sheet, as shown in Fig. 6H. As the completed key sheet is then attached to the substrate of the cellular phone, the key sheet can achieve the function of the push button switches of the cellular phone.
To prevent abrasion on the surface of the outer-layer sheet which achieves the push button function, during manufacture of the key sheet, it is possible to add a step of adhering a protective sheet to that surface. It is also possible to add a step of separating the protective sheet after the key sheet is completed.

### (Explanation of Another Embodiment of Member for Push Button Switches and Manufacture Method thereof according to the Invention)

The member for push button switches and a manufacture method thereof according to the invention are not limited to the embodiments described above, and various other embodiments are encompassed in the scope of the invention.

Description of Reference Numerals
- 2: key sheet
- 4: key top
- 6: metal sheet
- 6a, b: metal member
- 6c: opening
- 8a: outer-layer sheet
- 8b: outer-layer sheet
- 10: key base
- 10a: pressing projection
- 10b: projecting portion
- 12: dish-like contact
- 14: substrate
- 16: notch area
- 18: notch area (for decoration)
- 20: adhesive sheet
- 30: concavoconvex shape
- 32: projecting shapes
- 34: colored portion
- 40a: metal portion inside notch area
- 40b: metal portion outside notch area
- 60: metal sheet
- 60a, b, c: metal member

## Claims

1. A key top to be used for push button switches of a portable electronic device, comprising:
a metal sheet with an approximately thin plate shape; and
an outer-layer sheet made of a flexible material which is connected to at least one surface of said metal sheet.

2. The key top according to claim 1, which has a sandwich structure in which said outer-layer sheet is connected to both surfaces of said metal sheet.

3. The key top according to claim 1 or 2, wherein a predetermined concavoconvex pattern is formed on said metal sheet.

4. The key top according to any one of claims 1 to 3, wherein a notch area for decoration and/or for push button movement is provided at said metal sheet.

5. The key top according to claim 4, wherein in said notch area of said metal sheet, an inner metal portion existing inward of said notch area and an outer metal portion existing outward of said notch area are isolated by said notch area, and a positional relationship between said inner metal portion and said outer metal portion is maintained by said connected outer-layer sheet.

6. The key top according to claim 5, wherein predetermined coloring is applied to the position corresponding to said notch area on at least one of said outer-layer sheets.

7. A key sheet to be used for push button switches of a portable electronic device, having a structure such that a sheet-like key base made of an elastic material is connected to the key top set forth in any one of claims 1 to 6.

8. A key sheet to be used for push button switches of a portable electronic device, comprising:
a key top having a sandwich structure having a metal sheet with an approximately thin plate shape, and outer-layer sheets of a flexible material which are connected to both surfaces of said metal sheet;
a sheet-like key base made of an elastic material which is connected to one surface of said key top;
wherein a notch area for push button movement is provided at least one of said outer-layer sheets and said metal sheet; and a projecting portion provided on said key base is inserted in said notch area.

9. A method of manufacturing a key sheet to be used for push button switches of a portable electronic device, including the steps of:
connecting an outer-layer sheet made of a flexible material to one surface of a metal sheet;
providing a first notch area on said metal sheet by etching from the surface to which said outer-layer sheet is not connected;
connecting an outer-layer sheet to the surface of said metal sheet to which the outer-layer sheet is not connected;
providing a second notch area on least one of said outer-layer sheets and said metal sheet by stamping,
forming a sheet-like key base made of an elastic material which has a projecting portion corresponding to a shape of said second notch area; and
inserting said projecting portion in said second notch area and connecting said key base to said outer-layer sheet in which said second notch area is provided.

10. The method according to claim 9, further including a step of applying predetermined coloring to a position of said outer-layer sheet which corresponds to said first notch area and/or said second notch area, before or after connecting said outer-layer sheet to said metal sheet.
